(19) Europäisches Patentamt
European Patent Office
Office européen des brevets

(11) Numéro de publication: **0 275 765 B1**

(12) **FASCICULE DE BREVET EUROPEEN**

(45) Date de publication de fascicule du brevet: **25.03.92** (51) Int. Cl.[5]: **G06F 15/332**

(21) Numéro de dépôt: **87402909.3**

(22) Date de dépôt: **18.12.87**

# (54) Circuit intégré de traitement numérique de signaux.

(30) Priorité: **22.12.86 FR 8617936**

(43) Date de publication de la demande:
**27.07.88 Bulletin 88/30**

(45) Mention de la délivrance du brevet:
**25.03.92 Bulletin 92/13**

(84) Etats contractants désignés:
**CH DE FR GB IT LI NL SE**

(56) Documents cités:
**EP-A- 0 141 752**
**US-A- 4 385 363**

**PROCEEDINGS IEEE ICASSP, 1984, pages 28A.3.1 - 28A.3.4, New York, US; B.G. LEE: "FCT - a fast cosine transform"**

(73) Titulaire: **SGS-THOMSON MICROELECTRONICS S.A.**
**101 Boulevard Murat**
**F-75016 Paris(FR)**

(72) Inventeur: **Cambonie, Joel**
**THOMSON-CSF SCPI 19, avenue de Messine**
**F-75008 Paris(FR)**

(74) Mandataire: **Guérin, Michel et al**
**THOMSON-CSF SCPI**
**F-92045 PARIS LA DEFENSE CEDEX 67(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 275 765 B1

Rank Xerox (UK) Business Services

## Description

La présente invention concerne le traitement numérique de signaux, et plus particulièrement elle concerne un circuit capable de recevoir des signaux représentant n valeurs numériques $x_j$ pour produire des signaux représentant n coefficients numériques $F_v$de la forme

$$F_v = \sum_{j=0}^{n-1} x_j \, f\,(j,v)$$

Dans cette catégorie rentrent en particulier les transformations dites "transformations cosinus monodimensionnelles" ou f (j,v) est de la forme

$\cos (2\,j\ +\ 1)\ v\ \pi/n$

Ces transformations sont utilisées en particulier pour traiter des images, en vue de préparer leur transmission sous forme numérique.

Dans ce cas, à partir d'un bloc de n x n valeurs numériques, on produit n x n coefficients $F_v$.

Pour réaliser ces transformations, on utilise des algorithmes, par exemple l'algorithme de Byeong Gi Lee pour la transformée cosinus monodimensionnelle.

L'algorithme de Byeong Gi Lee est décrit dans l'article "FCT - a Fast Cosine Transform", paru dans les Proceedings IEEE ICASSP de 1984.

Ces algorithmes se représentent sous forme de graphes indiquant les opérations successives à faire sur les données ou groupes de données qui sont supposées arriver en parallèle.

L'algorithme de Byeong Gi Lee est représenté par le graphe de la figure 1. Les données d'entrée à traiter sont les valeurs numériques $x_0$ à $x_{15}$ (16 valeurs), chacune codée par exemple sur 16 bits. Les valeurs de sortie sont les coefficients F0 à F15. Les données d'entrée sont traitées deux à deux dans une première série d'opérateurs qui fournissent chacun deux résultats; les résultats sont à nouveau traités deux par deux dans une seconde série d'opérateurs qui fournissent à leur tour chacun deux résultats, et ainsi de suite.

Dans ce graphe, on rencontre deux sortes d'opérateurs, redessinés schématiquement à la figure 2; un opérateur d'addition fait correspondre à deux valeurs A et B les valeurs A+B et B, et un opérateur dit "papillon" fait correspondre à deux valeurs A et B les valeurs A+B et c(A-B) ou c est un coefficient multiplicateur.

Pour mieux identifier ces opérateurs sur la figure 1, on a entouré d'un rectangle un opérateur d'addition, et d'un autre rectangle un opérateur papillon. Le graphe de la figure 1 comporte 32 opérateurs papillon et 17 opérateurs d'addition.

La figure 2 représente aussi deux autres opérateurs utilisés lorsqu'on veut exécuter la transformation inverse de la transformation originale, c'est-à-dire lorsqu'on veut retrouver des valeurs $x_j$ à partir de coefficients $F_v$. Les opérateurs sont respectivement un opérateur addition "retour" fournissant A+B et A à partir de A et B, et un opérateur papillon "retour" fournissant $A+c_rB$ et $A-c_rB$ à partir de A et B.

Les architectures des circuits destinés à effectuer des transformations du type, cosinus sont conçues pour traiter les données en temps réel, c'est à dire, suffisamment rapidement pour que les résultats du calcul soient fournis avec un débit égal au débit de données entrant dans le circuit.

Une architecture déjà proposée consiste à réaliser des opérateurs microprogrammés en parallèle pour traiter simultanément n séries de n valeurs numériques $x_j$. Chaque opérateur est capable d'exécuter des opérations très simples sous la commande d'un séquenceur microprogrammé, et la séquence d'opérations exécutées permet d'exécuter la totalité de l'algorithme sur les n séries, grâce à un microprogramme d'instructions; tous les opérateurs reçoivent simultanément la même instruction. L'algorithme de Byeong Gi Lee pour traiter 16 valeurs numériques de 16 bits chacune nécessite par exemple environ 500 instructions (d'addition, de transfert d'un registre dans un autre, de décalage etc...). Un bloc de lignes de 16 valeurs chacune est traité par 16 opérateurs affectés chacun à une ligne de 16 valeurs.

Par conséquent, dans ce type d'architecture, on utilise des n opérateurs non specialisés, capables non seulement d'exécuter plusieurs types d'opérations ( addition ou papillon, aller ou retour), mais aussi d'exécuter ces opérations sur plusieurs données se présentant successivement sur les entrées de ces opérateurs.

Ainsi, sur le graphe de la figure 1, un opérateur exécutera l'opération papillon sur deux données $x_0$ et $x_{15}$, puis sur deux autres données $x_1$ et $x_{14}$etc., puis quand il aura fini une série de 8 opérations, il recommencera sur les 16 résultats de ces opérations, c'est-à-dire d'abord sur deux données qui sont d'une part le résultat obtenu à partir de $x_0$ et $x_{15}$ et d'autre part le résultat obtenu à partir de $x_7$ et $x_{13}$ etc. La figure 3 montre comment se présente l'architecture d'un tel circuit, avec une mémoire de travail de 16 mots et un opérateur réalisant des opérations successives (32 multiplications et 81 additions) sur les mots de la mémoire, l'opérateur étant commandé par un programme d'instructions

émis par un séquenceur microprogrammé (environ 500 instructions pour exécuter la transformation sur 16 points).

Dans une telle architecture, il est nécessaure de cascader deux circuits pour réaliser la transformation cosinus bidimensionnelle.

Dans une autre architecture de circuit les lignes de 16 valeurs numériques sont introduites séquentiellement, l'une après l'autre, et, une fois qu'elles sont stockées, une matrice d'opérateure reçoit les 16 valeurs numériques en parallèle. Les opérateurs sont ceux de la figure 2, et ils sont réunis entre eux comme sur le graphe de la figure 1. C'est une architecture de type systolique, où la topologie du circuit est très proche de celle du graphe. Les opérateurs sont nécessairement des opérateurs "série", c'est à dire travaillent séquentiellement d'abord sur les bits de poids faible des nombres à traiter, puis sur les bits de poids immédiatement supérieur etc. Les 16 valeurs numériques sont donc introduites chacune sous forme de 16 bits entrant en série dans la matrice d'opérateurs. Chaque opérateur traite deux données bien déterminées; par exemple un opérateur est affecté uniquement à l'exécution d'une opération papillon sur les données $x_0$ et $x_{15}$, et il y aura nécessairement d'autres opérateurs pour traiter les autres données et les résultats des traitements sur ces données. C'est une différence essentielle avec l'architecture décrite précédemment. Cette architecture de type systolique à l'avantage d'être rapide et de faible encombrement. Mais la précision des calculs est nécessairement limitée, le traitement des blocs de taille inférieure à la taiile normalement prévue est difficile, et la souplesse et la polyvalence du circuit sont faibles.

Pour réaliser un circuit intégré ayant de très bonnes performances en ce qui concerne la vitesse d'encombrement, la versatilité, et l'aptitude à exécuter aussi bien la transformation de valeurs $x_j$ en coefficients $F_v$ que la transformation inverse permettant de retrouver les valeurs $x_j$ à partir des coefficients $F_v$, la présente invention propose une architecture différente des architectures connues.

Cette architecture comprend :

- un bus de transmission de signaux, capable de transmettre un signal de p bits représentant une valeur numérique.
- des interrupteurs répartis le long du bus pour laisser passer ou interrompre le passage des signaux le long du bus, deux interrupteurs adjacents le long du bus étant actionnés en opposition de phase, de manière à diviser le bus en tronçons, chaque tronçon de bus communiquant alternativement avec un tronçon précédent et un tronçon suivant,
- des opérateurs de calcul sont connectés à certains tronçons du bus et peuvent en recevoir des données successives de p bits, pour effectuer un calcul sur ces données et renvoyer des données de résultat sur ce tronçon de bus,
- des mémoires tampons sont connectées à d'autres tronçons de bus pour en recevoir plusieurs données successives et les renvoyer sur le bus dans un ordre différent de l'ordre de réception,
- chaque opérateur de calcul ou mémoire tampon est commandé par un séquencer microprogrammé

Avec ce type d'architecture, chaque étage relié à un tronçon de bus peut communiquer par le bus uniquement avec l'un de ses deux voisins (le voisin amont pour en recevoir des données, le voisin aval pour lui fournir des données).

Cette structure peut être parcourue dans les deux sens pour faire une transformation inverse permettant de retrouver les valeurs numériques $x_j$ à partir des coefficients $F_v$ ; seul les séquencers microprogrammés influent sur le sens de la communication.

La structure est très versatile en un sens qu'elle permet de s'adapter à différents algorithmes de transformation sans beaucoup de modifications de circuit ; également, pour un même algorithme tel que celui de Byeong Gi Lee, capable de traiter des blocs de 16 x 16 valeurs numériques, on peut, en modifiant légèrement les microprogrammes stockés en mémoire morte (ou en masquant certaines données de cette mémoire), traiter les données d'entrée par blocs de 8 x 8 ou 4 x 4. Ceci n'est pas possible avec une architecture systolique.

Enfin, cette architecture est moins encombrante qu'une architecture où un bloc de n x n données est traité par n étages en parallèle traitant simultanément chacun n données.

D'autres caractéristiques et avantages de l'invention apparaitront à la lecture de la description détaillée qui suit et qui est faite en référence aux dessins connexés dans lesquels ;

- la figure 1 représente le graphe de l'algorithme de Byeong Gi Lee;
- la figure 2 représente symboliquement deux opérateurs élémentaires aller et deux opérateurs élémentaires retour utilisés dans l'algorithme de Byeong Gi Lee;
- la figure 3 représente une architecture de circuit proposée antérieurement;
- la figure 4 représente l'architecture selon l'invention;
- la figure 5 représente un opérateur élémentaire commandé par microprogramme;
- la figure 6 représente le graphe de l'algorithme de Byeong Gi Lee réorganisé pour une bonne adaptation à l'architecture de circuit selon l'invention;

- la figure 7 représente l'architecture du circuit élaborée à partir de ce graphe réorganisé.

L'architecture du circuit selon la présente invention est visible à la figure 4.

Elle comprend essentiellement un bus de transmission de données, divisé en tronçons séparés les uns des autres par des interrupteurs qui empêchent out autorisent le passage de données d'un tronçon à l'autre. Les interrupteurs encadrant un tronçon donné sont actionnés en opposition de phase de sorte qu'un tronçon peut communiquer avec l'un ou l'autre de ses deux voisins, mais pas avec les deux à la fois.

Les interrupteurs sont désignés par I1, I2, etc dans l'ordre de leur succession le long du bus.

Les phases de fermeture des interrupteurs sont désignées par phi et phib respectivement, phib étant le complément logique de phi.

A chaque tronçon sont connectés soit un ou plusieurs opérateurs de calcul, soit une mémoire tampon.

Les opérateurs de calcul reçoivent des données arrivant sur le tronçon de bus auquel ils sont connectés et ils fournissent un résultat sur ce même tronçon.

Les mémoires tampon enregistrent des données arrivant sur le tronçon auquelles elles sont connectées et elles peuvent renvoyer ces données sur le même tronçon, mais dans un ordre différent de celui d'arrivée.

Les opérateurs de calcul comme les mémoires tampon sont commandés chacun par un séquenceur microprogrammé respectif, l'ensemble des séquenceurs étant commandés par un compteur global dont le cycle de comptage dure n périodes Tech pour un calcul sur n données.

La période de commutation des interrupteurs séparant les tronçons est la période Tech à laquelle les données à traiter se présentent à l'entrée du circuit, par exemple 74 nanosecondes. Les résultats du calcul sortent à la même cadence.

Avec cette architecture, appliquée au graphe de la figure 1, on peut prévoir que le premier tronçon de bus, B1, est affecté à une première mémoire MEMI dont le rôle est de recevoir les données $x_j$ à traiter dans l'ordre où elles arrivent, ceci pendant les phases phi, puis de les restituer pendant les phases phib, mais dans un ordre différent et plus particulièrement dans un ordre qui se prête bien à la première opération de calcul qui sera effectuée sur ces données.

Le deuxième tronçon de bus, B2, est relié à un ou éventuellement plusieurs opérateurs de calcul qui reçoivent de la mémoire MEM1 des données à traiter pendant les périodes phib. Par exemple, on prévoit un opérateur "papillon" OP1, et un opérateur papillon OP2, qui travaillent pratiquement en parallèle (pour aller plus vite). L'opérateur OP1 prélève par exemple les données $x_0$ et $x_{15}$, et calcule le résultat pendant que l'opérateur Op2 prélève les données $x_1$ et $x_{14}$, puis l'opérateur OP1 prélève $x_3$ et $x_{12}$ pendant que OP2 effectue son calcul, etc.

Le troisième tronçon de bus B3 est relié à une mémoire tampon MEM2 dont le rôle est de recevoir pendant les phases phi les résultats de calculs effectués par les opérateurs OP1 et OP2, puis de restituer ces données pendant les phases phib mais dans un ordre plus approprié au traitement par les opérateurs des tronçons suivants.

Le quatrième tronçon de bus comprend par exemple deux autres opérateurs OP3 et OP4, affectés à une deuxième série d'opérations papillon, c'est à dire, si on se réfère au graphe de la figure 1, à la série d'opérations papillon qui doit être exécutée sur les résultats des opérations papillon de la première série.

Par exemple, $x_0$ et $x_{15}$ avaient donné un premier et un second résultats; $x_7$ et $x_8$ un troisième et un quatriéme résultats; dans les opérateurs OP3 et OP4, le premier résultat et le troisième vont subir une opération papillon, et de même, le deuxième et le quatrième vont aussi subir une opération.

Ainsi de suite, on va établir des tronçons successifs de bus, avec des opérateurs qui correspondent étroitement aux colonnes du graphe de la figure 1, les tronçons reliés à ces opérateurs pouvant être séparés, bien que ce ne soit pas toujours nécessaire, par des tronçons reliés à des mémoires servant à réorganiser l'ordre dans lequel les données produites par un opérateur doivent se présenter à l'entrée de l'opérateur suivant.

Dans le graphe de la figure 1, on dénombre quatre colonnes consécutives d'opérations papillon auquelles on peut affecter quatre tronçons de bus B2, B4, B6, B8, ces tronçons étant séparés par des tronçons B1, B3, B5, B7 affectés à quatre mémoires de réorganisation MEM1, MEM2, MEM3, MEM4. Puis on dénombre trois colonnes d'opérations d'addition auxquelles on peut affecter trois tronçons de bus B10, B12, B14 séparés par des tronçons B9, B11, B13 affectés à trois mémoires de réorganisation MEM5, MEM6, MEM7. Les opérateurs d'addition sont désignés par les lettres AD et les opérateurs papillon par les lettres OP.

On a représenté sur la figure 4 une mémoire morte ROM qui contient les instructions de commande des opérateurs et des mémoires tampon, ainsi que les coefficients $C_r$ utilisés dans les différentes opérations papillon.

Cette mémoire ROM contient donc notamment les adresses successives des mémoires MEM1 à MEM7 auxquelles on doit soit enregistrer soit lire une donnée, puisque par principe ces adresses ne seront pas consécutives (ou en tout cas ne seront

pas consécutives à la fois en écriture et en lecture).

La mémoire ROM reçoit quant à elle comme adresses les sorties d'un compteur général CPT dont le cycle de comptage correspond au temps de calcul de la totalité d'une transformation de n données. Par exemple la période de comptage est de Tech/2 et le cycle est de 256xTech.

Chaque opérateur peut être analogue à celui qui est représenté à la figure 5: il comprendrait une unité arithmétique et logique UAL simple capable d'exécuter des opérations élémentaires d'addition, de soustraction, de décalage à gauche ou à droite d'un ou deux bits; il comprendrait aussi des registres R1, R2, L1, L2, pour permettre d'effectuer ces opérations élémentaires; et il recevrait de la mémoire ROM des bits de commande précisant à chaque instant les opérations à effectuer.

En changeant les instructions contenues dans la mémoire ROM, on peut changer l'algorithme de calcul; en masquant certaines instructions, on peut faire en sorte que l'algorithme soit modifié pour traiter par exemple des groupes de huit données au lieu de seize.

Enfin, le circuit est réversible en ce sens qu'il permet, toujours grâce à une modification des programmes d'instructions dans la mémoire ROM, d'appliquer des données à la sortie du bus pour effectuer une transformation inverse de la transformation originale. Il faur savoir en effet que la transformation inverse s'effectue, notamment pour l'algorithme de Byeong Gi Lee, en parcourant de gauche à droite le graphe de la figure 1.

Dans ce cas, les microprogrammes d'instructions contenus dans la mémoire ROM sont tels qu'un opérateur d'un tronçon de bus prélève, pour les traiter, des données issues du tronçon suivant et non du tronçon précédent. Les phases phi et phib sont permutées.

Pour terminer cette description, il faur préciser qu'il peut être intéressant de réorganiser le graphe décrivant l'algorithme de calcul avant de définit l'architecture précise, c'est à dire les différents tronçons de bus et les opérateurs et mémoires tampon qui leur sont rattachés.

C'est ainsi que l'on propose ici une nouvelle présentation du graphe de Byeong Gi Lee, visible à la figure 6, présentation qui a l'avantage de minimiser le nombre de tronçons de bus nécessaires.

Sur le graphe de la figure 6, les coefficients multiplicateurs sont indiqués à l'intérieur de chaque bloc. Les données doivent être présentées à l'entrée du graphe avec l'organisation définie par les indices $x_j$ de la colonne tout à fait à droite du graphe.

Comme on le voit sur ce graphe, on a besoin d'un premier tronçon de bus B1 pour exécuter les opérations de papillon de la première colonne de blocs; à ce tronçon seront connectés par exemple deux opérateurs OP1 et OP2 travaillant pratiquement en parallèle; on a besoin d'un autre tronçon B2 pour exécuter les opérations de la deuxième colonne à partir des résultats fournis par OP1 et OP2; là encore, deux autres opérateurs OP3 et OP4 peuvent travailler en parallèle.

Mais il n'est pas nécessaire de prévoir une mémoire de réorganisation de données entre ces deux groupes de deux opérateurs, car les croisements des chemins de calcul du graphe sont suffisamment simples pour que la réorganisation puisse être faite directement par le microprogramme d'instructions qui pilote les opérateurs OP3 et OP4.

Au contraire, après le traitement par les opérateurs OP3 et OP4, la réorganisation est très importante et on prévoit par conséquent un troisième tronçon de bus B3 couplé à une mémoire tampon MEM2.

La figure 7 représente la constitution du circuit qui en résulte.

On prévoit ensuite un quatrième tronçon B4 avec deux opérateurs OP5 et OP6, un cinquième tronçon B5 avec deux opérateurs OP7 et OP8, un sixième tronçon B6 avec une mémoire de réorganisation MEM3 (ce tronçon et cette mémoire sont facultatifs), un septième tronçon B7 avec un additionneur AD1, un huitième tronçon B8 avec un autre additionneur AD2 (là encore on peut se dispenser d'une mémoire de réorganisation entre les tronçons B7 et B8); enfin, on trouve un neuvième tronçon B9 avec une mémoire de réorganisation MEM4 et un dixième tronçon avec un dernier additionneur AD3.

On a ainsi décrit une architecture de circuit intégré particulièrement efficace, notamment pour la mise en oeuvre de l'algorithme de Byeong Gi Lee.

## Revendications

**1.** Circuit intégré de traitement numérique de signaux, réalisant une transformation spécifique de signaux d'entrée représentant n valeurs numériques $x_j$ pour produire des signaux représentant n coefficients $F_v$ de la forme

$$F_v = \sum_{j=0}^{n-1} x_j \ f(j,v)$$

où f(j,v) est de las forme cos $(2j+1)v\ \pi/n$ comprenant un bus de transmission de signaux, capable de transmettre n signaux de p bits représentant une valeur numérique,

caractérisé en ce qu'il comporte :

- des interrupteurs (I1, I2...) répartis le long du bus pour laisser passer ou interrompre le passage des signaux le long du bus, deux interrupteurs adjacents le long du bus étant actionnés en opposition de phase, de manière à diviser le bus en tronçons (B1, B2...), chaque tronçon de bus communiquant alternativement avec un tronçon précédent et un tronçon suivant,
- des opérateurs de calcul (OP1, OP2...) sont connectés à certains tronçons du bus et peuvent en recevoir des données successives de p bits, pour effectuer un calcul sur ces données et renvoyer des données de résultat sur ce tronçon de bus,
- des mémoires tampons (MEM1, MEM2...) sont connectées à d'autres tronçons de bus pour en recevoir plusieurs données successives et les renvoyer sur le bus dans un ordre différent de l'ordre de réception,
- chaque opérateur de calcul ou mémoire tampon est commandé par un séquenceur microprogrammé (ROM).

**2.** Circuit selon la revendication 2, caractérisé en ce qu'il comporte au moins sept tronçons successifs de bus séparés par des interrupteurs, le premier (B1), le deuxième (B2), le quatrième (B4), le cinquième (B5), étant couplés à des opérateurs capables d'exécuter des opérations du type papillon, le troisième (B3) et le sixième (B6) étant couplés à des mémoires, et le septième tronçon (B7) étant couplé à un opérateur capable d'exécuter une opération d'addition, l'opération d'addition étant une opération qui, à deux données A et B, fait correspondre deux données A + B et B, l'opération papillon étant une opération qui, à deux données A et B, fait correspondre deux données A + B et c(A-B) ou c est un coefficient multiplicateur.

## Claims

**1.** An integrated circuit for the digital processing of signals, performing a specific transformation of input signals representing n digital values $x_j$ so as to produce signals representing n coefficients $F_v$ of the form

$$F_v = \sum_{j=0}^{n-1} x_j f(j,v)$$

where f(j,v) is of the form cos (2j + 1) v $\pi$/n, comprising a signal transmission bus capable of transmitting n signals of p bits representing a digital values, characterized in that it includes:

- switches (I1, I2...) spaced apart along the bus for letting the signals pass along the bus or interrupting these signals, two adjacent switches along the bus being actuated in phase opposition, so as to divide the bus into sections (B1, B2...), each bus section communicating alternately with a preceding section and a following section,
- computing operators (OP1, OP2...) are connected to certain sections of the bus and may receive successive data of p bits therefrom, for carrying out a computation on these data and sending resulting data over this bus sections,
- buffer memories (MEM1, MEM2. ..) are connected to other bus sections so as to receive several successive data therefrom and send them over a bus in an order different from the order in which they were received,
- each computation operator or buffer memory is controlled by a microprogrammed sequencer (ROM).

**2.** A circuit as claimed in claim 1, characterized in that it includes at least seven successive bus sections separated by switches, the first (B1), the second (B2), the fourth (B4), the fifth (B5) being coupled to operators capable of carrying out operations of the butterfly type, the third (B3) and the sixth (B6) being coupled to memories, and the seventh section (B7) being coupled to an operator capable of carrying out an addition operation, the addition operation being an operation which causes two data A + B and B to correspond to two data A and B, the butterfly operation being an operation which causes two data A + B and c(A-B) to correspond to two data A and a, where c is a multiplicator coefficient.

## Patentansprüche

**1.** Integrierter Schalkreis für das digitale Verarbeiten von Signalen, wobei eine spezifische Transformation von Eingangssignalen durchgeführt wird, die n digitale Grössen $x_j$ repräsentieren, um Signale zu erzeugen, weiche n Koeffizienten $F_v$ der Form

$$F_v = \sum_{j=0}^{n-1} x_j f(j, v)$$

repräsentieren, wobei f (j, v) von der Form cos (2j + 1) v $\pi$/n ist,
mit einem Signalübertragungsbus, der n Signale von p Bits übertragen kann, die digitale Werte repräsentieren, dadurch **gekennzeichnet,** daß der Schaltkreis umfaßt:

- längs dem Bus im Abstand angeordnete Schalter (I1, I2...) zum Durchlassen der Signale längs des Buses oder Unterbrechen dieser Signale, wobei zwei längs des Buses benachbart angeordnete Schalter in Phasen-Opposition betätigt werden, so daß der Bus in Abschnitte (B1, B2...) unterteilt ist, wobei jeder Busabschnitt abwechselnd mit einem vorhergehenden Abschnitt und einem nachfolgenden Abschnitt kommuniziert,
- Rechenoperatoren (OP1, OP2...), die mit gewissen Abschnitten des Buses verbunden sind und sukkzessive Daten von p Bits aus aufnehmen können, um einen Rechenvorgang mit diesen Daten durchzuführen und Ergebnisdaten daraus über diese Busabschnitte zu senden,
- Pufferspeicher (MEM1, MEM2...), die mit anderen Busabschnitten verbunden sind, um verschiedene aufeinanderfolgende Daten daraus aufzunehmen und sie über einen Bus in einer Sende-Ordnung auszusenden, welche sich von der Empfangsordnung dieser Daten unterscheidet,
- wobei jeder Rechenoperator oder Pufferspeicher von einem mikroprogrammierten Zuordner (ROM) gesteuert wird.

2. Schaltkreis nach Anspruch 1, dadurch **gekennzeichnet,** daß er mindestens sieben aufeinanderfolgende Busabschnitte aufweist, welche von Schaltern getrennt sind, wobei der erste (B1), der zweite (B2), der vierte (B4), der fünfte (B5) an Operatoren gekoppelt sind, welche Operationen der Schmetterlingsart ausführen können, wobei der dritte (B3) und der sechste (B6) an Speicher gekoppelt und der siebte Abschnitt (B7) an einen Operator gekoppelt sind, der eine Addieroperation durchführen kann, wobei die Addieroperation eine Operation ist, welche zwei Daten A + B und B veranlaßt, den zwei Daten A und B zu entsprechen und die Schmetterlings-Operation eine Operation ist, welche zwei Daten A + B und c(A-B) dazu veranlaßt, den beiden Daten A und B zu entsprechen, worin c ein Multiplikator-Koeffizient ist.

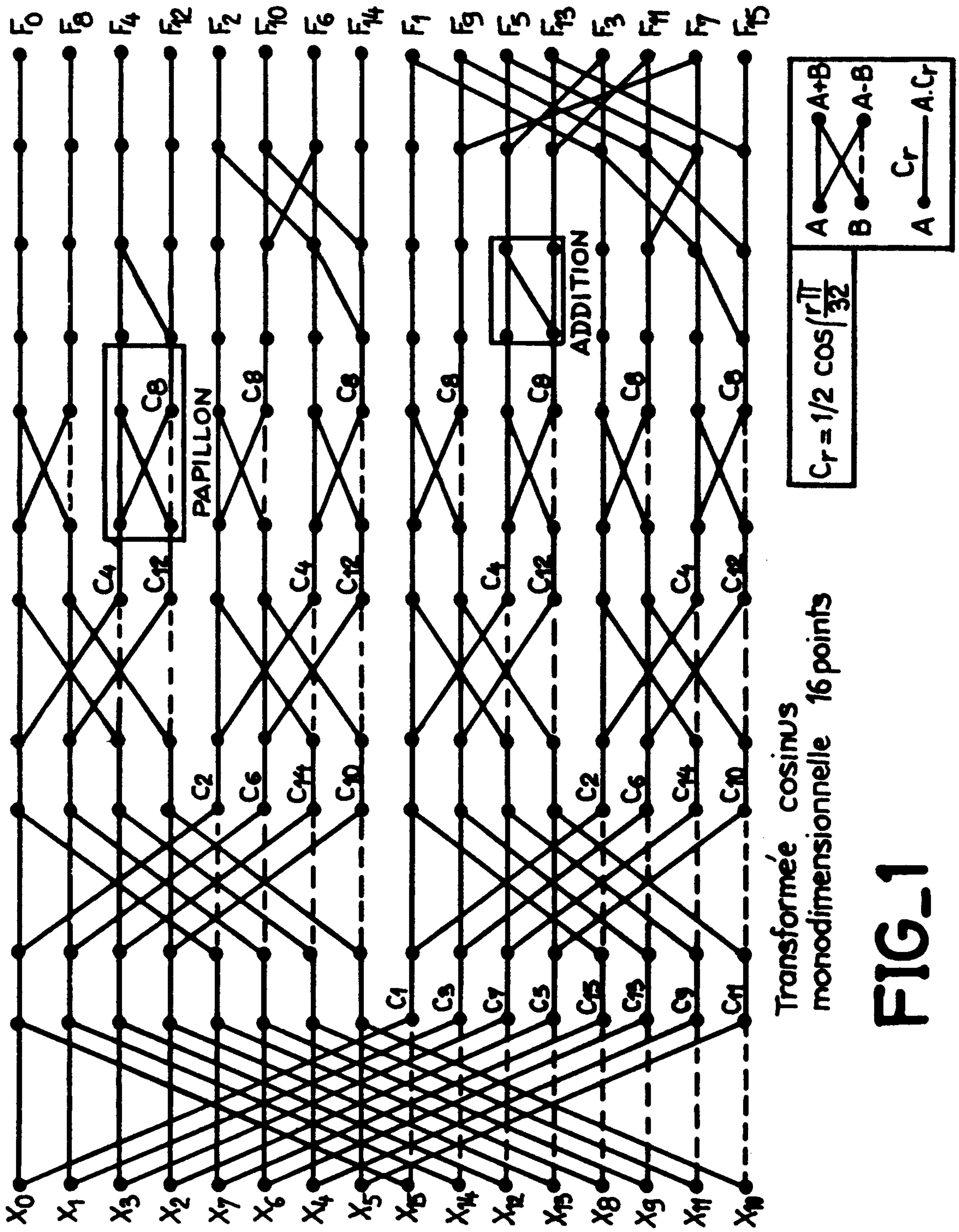


Transformée cosinus monodimensionnelle 16 points

FIG_1

FIG_2

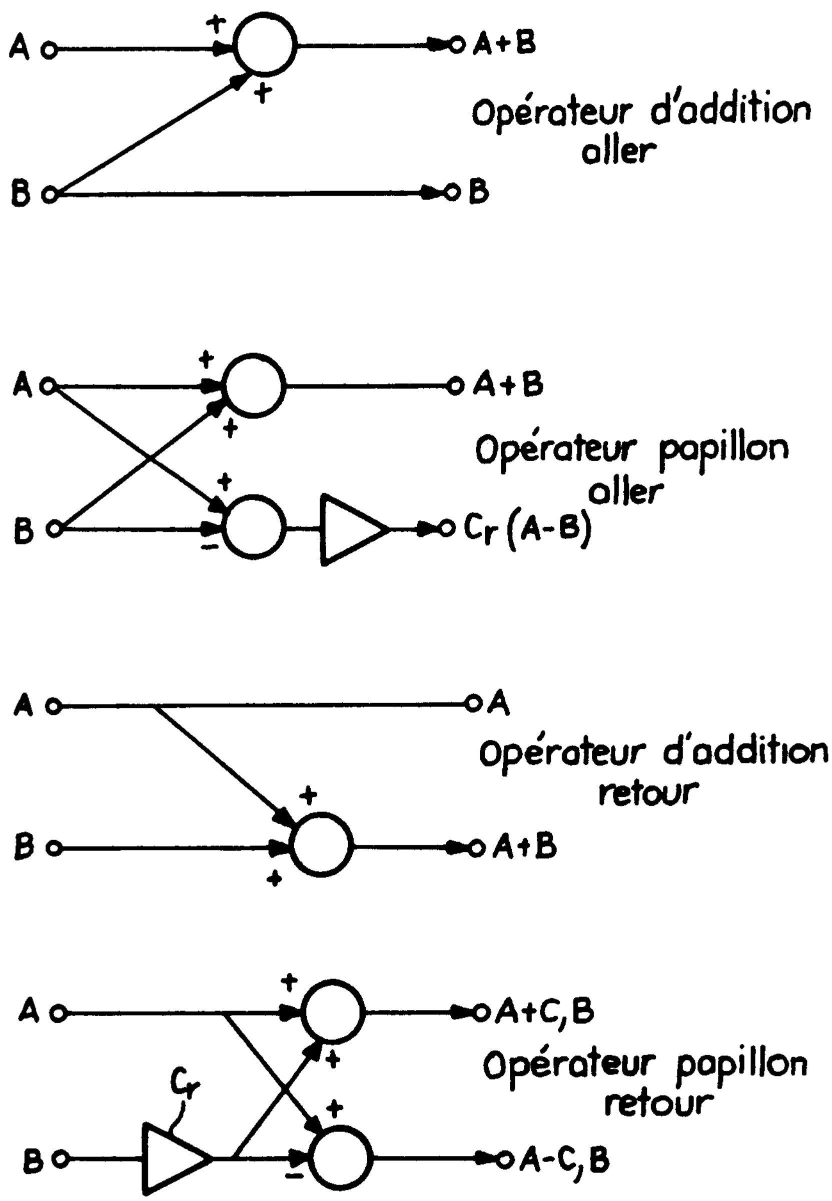
A
B
+
+
A+B
B
Opérateur d'addition
aller
A
B
+
+
+
−
A+B
Cr (A-B)
Opérateur papillon
aller
A
B
+
+
A
A+B
Opérateur d'addition
retour
A
B
Cr
+
+
+
−
A+C, B
A-C, B
Opérateur papillon
retour

FIG_3

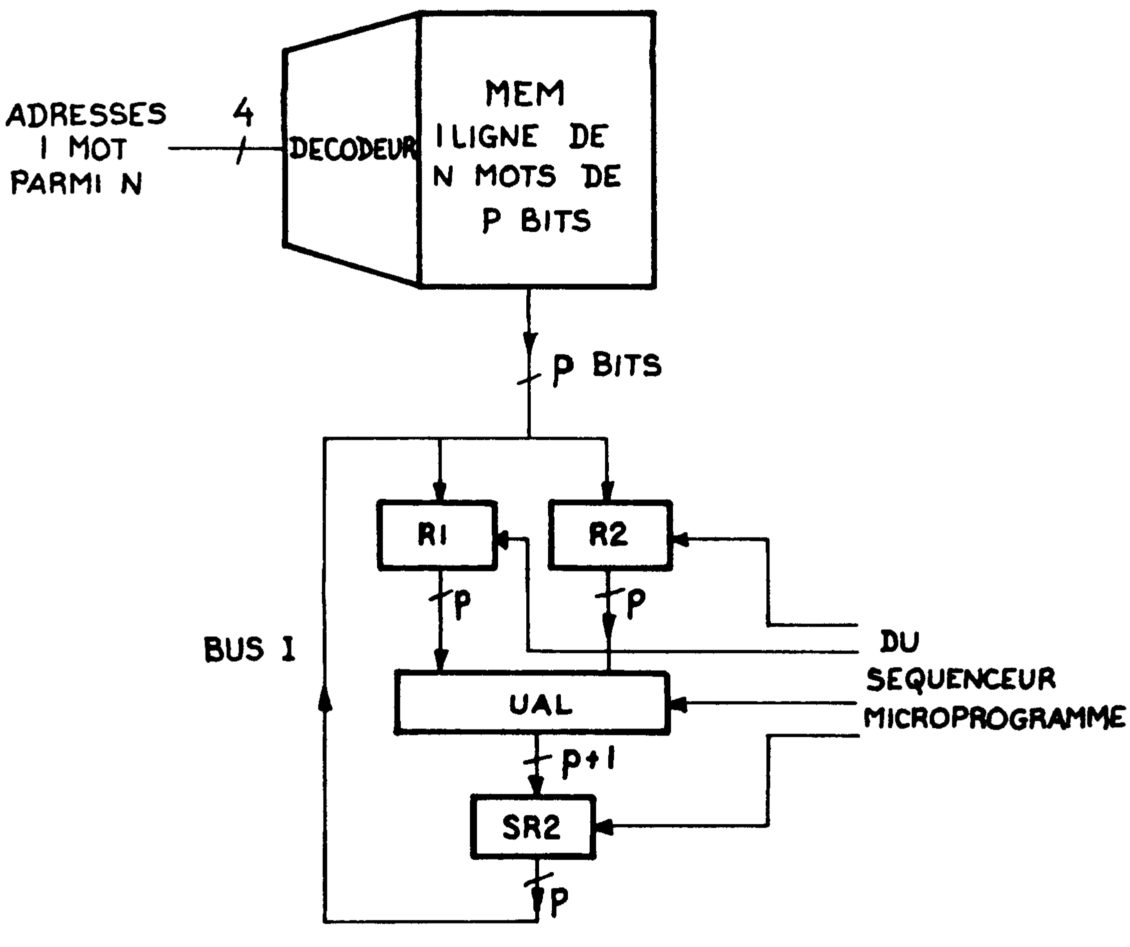
ADRESSES
I MOT
PARMI N
4
DECODEUR
MEM
I LIGNE DE
N MOTS DE
P BITS
P BITS
R1
R2
P
P
BUS I
UAL
DU
SEQUENCEUR
MICROPROGRAMME
P+1
SR2
P

FIG_4

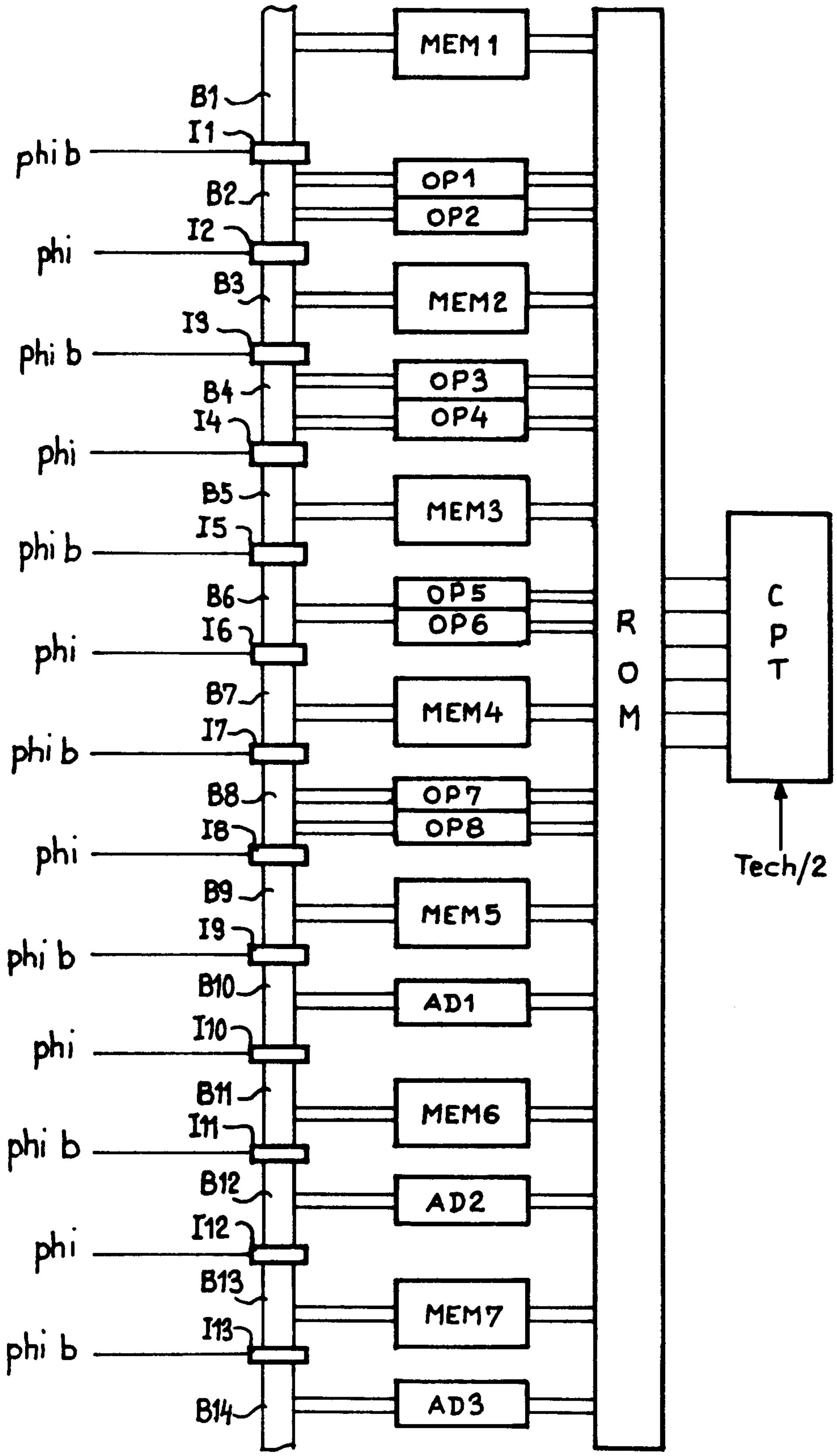
MEM1
B1
I1
phi b
OP1
OP2
B2
I2
phi
B3
MEM2
I3
phi b
OP3
OP4
B4
I4
phi
B5
MEM3
I5
phi b
OP5
OP6
B6
I6
phi
B7
MEM4
I7
phi b
OP7
OP8
B8
I8
phi
B9
MEM5
I9
phi b
B10
AD1
I10
phi
B11
MEM6
I11
phi b
B12
AD2
I12
phi
B13
MEM7
I13
phi b
B14
AD3
R
O
M
C
P
T
Tech/2

FIG_5

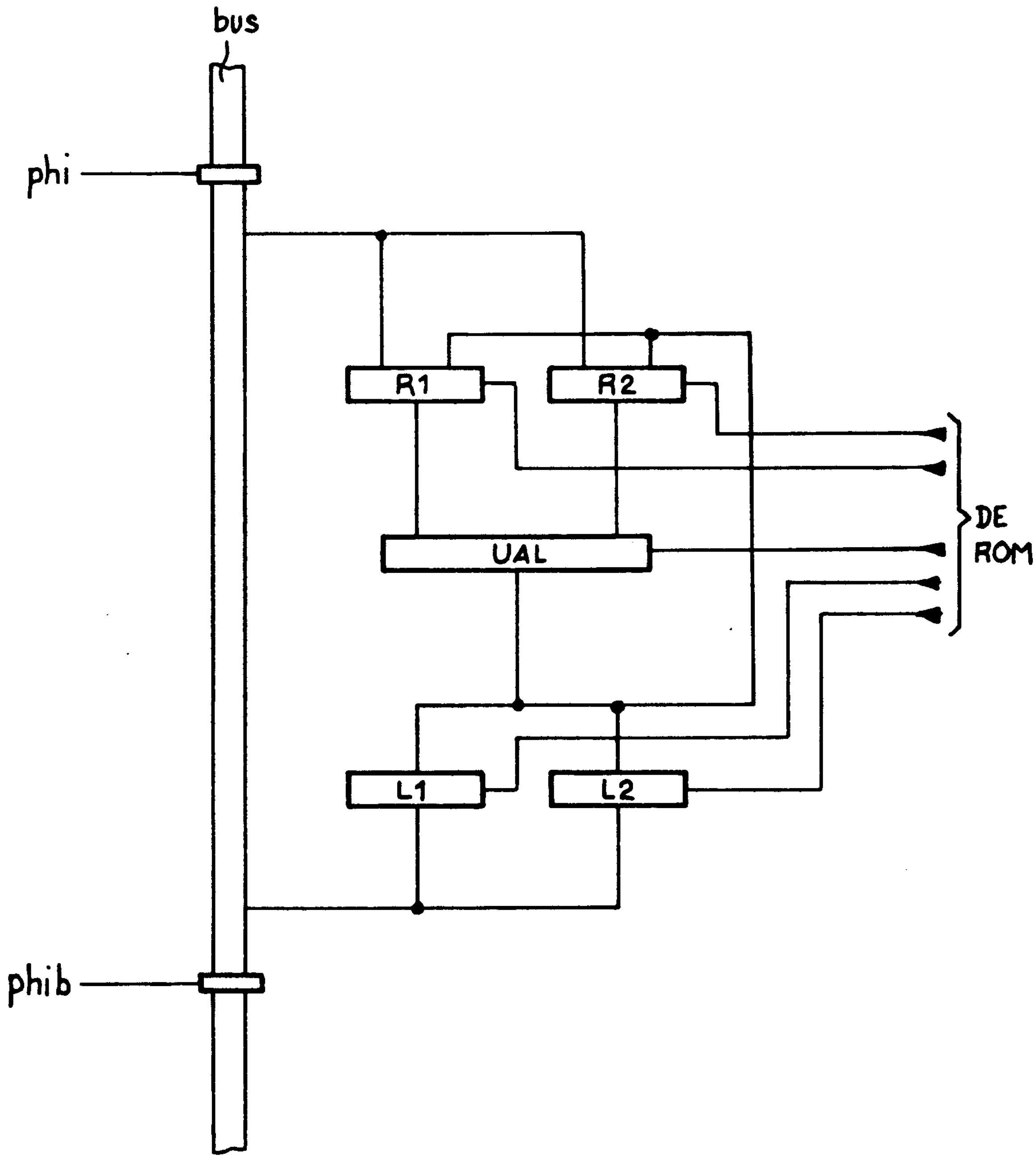

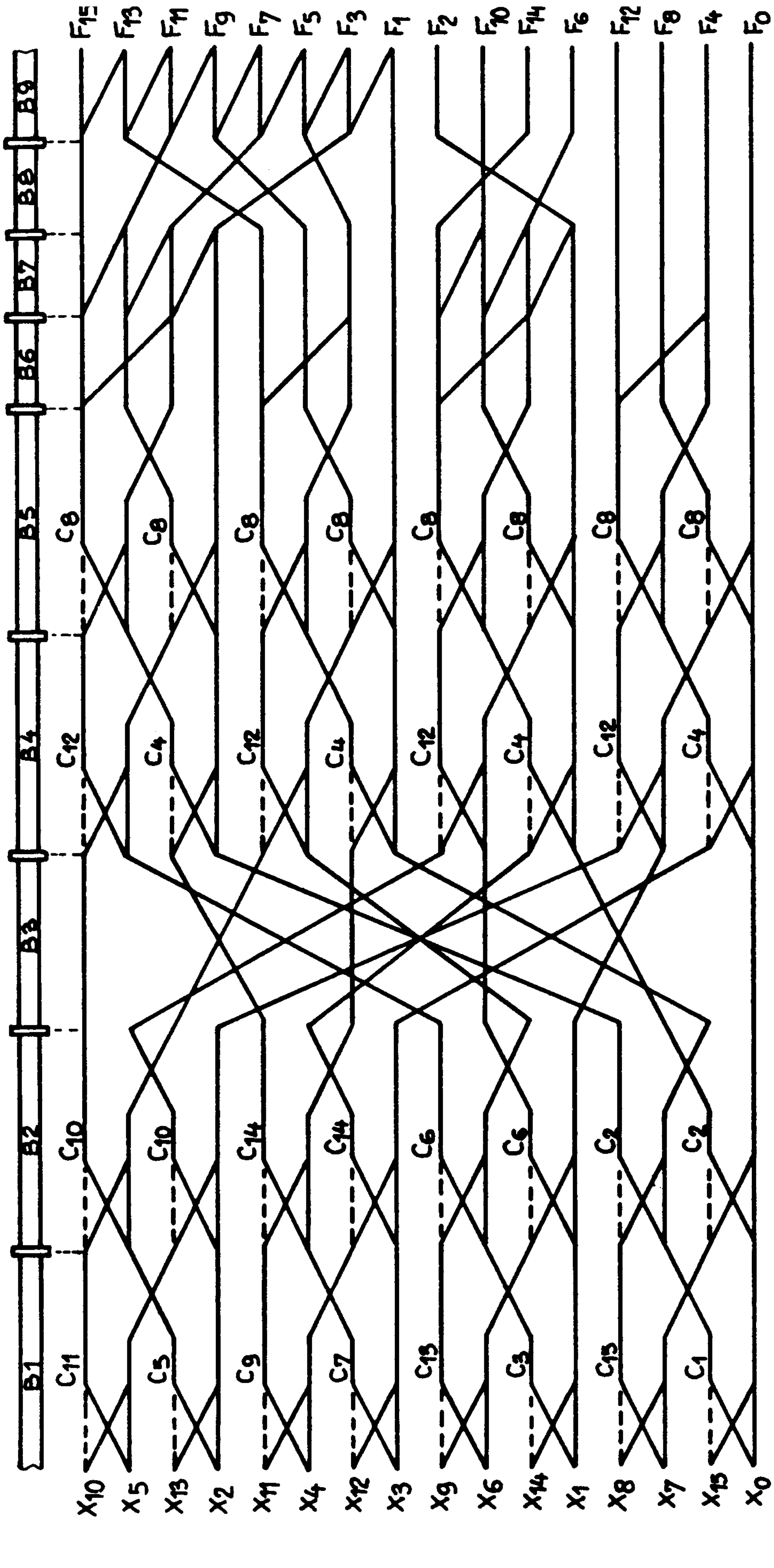

B1
B2
B3
B4
B5
B6
B7
B8
B9
C11
C5
C9
C7
C13
C3
C15
C1
C10
C10
C14
C14
C6
C6
C2
C2
C12
C4
C12
C4
C12
C4
C12
C4
C8
C8
C8
C8
C8
C8
C8
C8
X10
X5
X13
X2
X11
X4
X12
X3
X9
X6
X14
X1
X8
X7
X15
X0
F15
F13
F11
F9
F7
F5
F3
F1
F2
F10
F14
F6
F12
F8
F4
F0


FIG_6

FIG_7

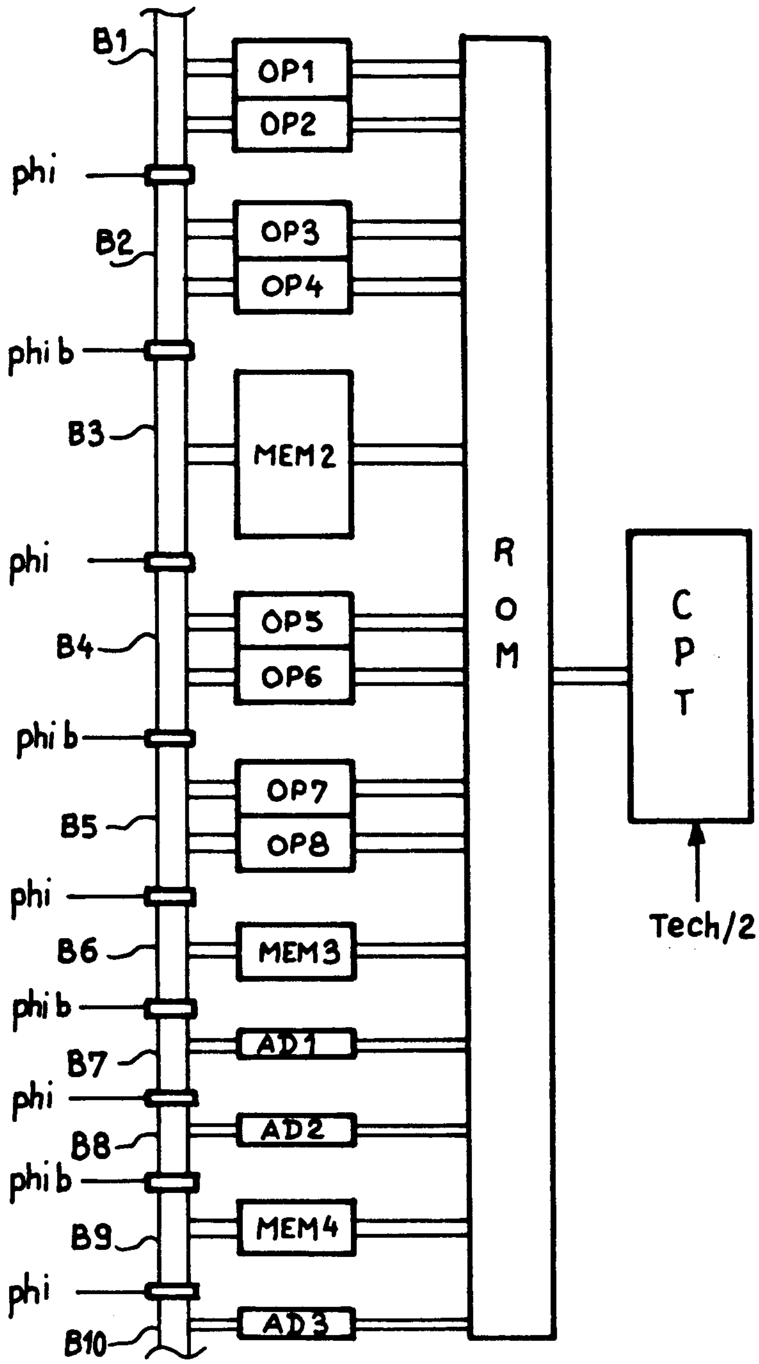
B1
OP1
OP2
phi
B2
OP3
OP4
phi b
B3
MEM2
phi
OP5
B4
OP6
phi b
OP7
B5
OP8
phi
B6
MEM3
phi b
AD1
B7
phi
AD2
B8
phi b
MEM4
B9
phi
AD3
B10
R
O
M
C
P
T
Tech/2